# EUROPEAN PATENT SPECIFICATION

(11) **EP 2 687 082 B1**
(45) Date of publication and mention of the grant of the patent: **23.09.2015**
(21) Application number: 12002566.3
(22) Date of filing: 11.04.2012
(51) Int. Cl.: A01D 45/16

(54) **Machine for cutting off tobacco leaves with stem holding for eastern type plants for harvesting, layering and collecting the leaves in collection containers**
Maschine zum Abschneiden von Tabakblättern mit Stammhalterung für Pflanzen des östlichen Typs zum Ernten, Schichten und Sammeln der Blätter in Sammelbehältern
Machine pour couper des feuilles de tabac avec maintien de tige pour la récolte de plantes de type oriental, stratification et collecte des feuilles dans des récipients de collecte

(43) Date of publication of application: 22.01.2014
(73) Proprietor: V.I.T. S.A., 570 22 Thessaloniki (GR)
(72) Inventor: Tsikis, Stefanos, 55132 Kalamaria Thessaloniki (GR)
(74) Representative: Bakatselou, Vassiliki

(56) References cited:
- US-A- 3 654 753
- US-A- 4 285 189
- US-A- 5 428 946
- US-A- 6 014 853
- US-A1- 2003 106 298

## Description

### FIELD OF THE INVENTION

The invention relates to a machine for cutting off tobacco leaves from the plant in the field, with simultaneous holding of the stem of the plant during the cutting off, harvesting, layering and orderly collecting the eastern type tobacco leaves in a mesh basket-container.

### DESCRIPTION OF PRIOR ART

The tobacco plants are divided into two great categories: Broadleaf such as Virginia, Burley, etc.Eastem such as Basma, Katerini, Izmir, Samsun, Prilep, Yaka, etc.

US 3 654 753 discloses a tobacco harvesting machine for cutting tobacco leaves from the stalk of the tobacco plant. The harvesting machine is provided with conveyers for conveying the cut leaves to the storage receptacle in a manner such that all of the stems of the leaves are disposed generally parallel with one another and the cut ends are all located at the same end of the stack of leaves.

Until today, the cutting off and harvesting of the leaves of broadleaf tobacco plants that grow to big height with a thick stem, has been performed either by hand or with the use of machines.

The machines are self-propelled with drivers. The machines are driven between the rows of plants, so that the plants are found between rotating fins that cut the leaves at the petiole. The stem of such tobacco plants is resistant, can endure the strain the machine causes it during the cutting off and there is no need for stem holding during the machine's movement. The cutting off mechanism comprises rotating plastic fins or metallic knives. The cut off leaves are conveyed with the use of rollers and belts into baskets located on the upper part of the machine. The leaves are large in size, larger than 15x25 centimetres and because of their large surface are easily conveyed to the mesh collection container. Subsequently, the collected leaves are placed in rectangular mesh containers which comprise integrated side needles for the holding of the leaves. The filled containers are placed in kilns for artificial drying ("curing") of leaves, a practice applied for the Virginia variety. For the variety Burley as well as Virginia, natural curing may also take place. The leaves are sawn in bunches manually or with the use of stapling machines and hung to dry naturally.

On the contrary, the eastern type tobacco plants grow to be smaller in height and their stem is thin and fragile, so that the broadleaf tobacco machines cannot be used and the cutting off and harvesting of leaves is performed by hand, whereupon the worker "breaks", cuts off the leaves from the stem and gathers them.

This procedure is particularly time consuming and requires large manpower, since the leaf gathering speed of a single person is given.

Concurrently, this procedure currently takes place during the early morning hours of the day during the summer, when the leaves are matured and the morning dew assists the leaves in being cut off (breaking from the stem) more easily.

Subsequently the hand-gathered leaves are assembled using a twine with the aid of a needle, thus creating a bunch. The bunch is hung beneath a plastic tent to dry.

### OBJECT AND DESCRIPTION OF THE INVENTION

The aim of the present invention is to minimise the man-hours, to reduce the harvesting time and thus the cost of the harvesting of tobacco leaves for eastern type plants.

### TECHNICAL PROBLEM SOLVED BY THE INVENTION

Namely the present invention relates to the mechanical cutting off of tobacco leaves from the stem of the plant, with simultaneous stem holding, to the collecting of leaves and to the ordered placing of the leaves in a mesh container, ready for curing.

### DISCLOSURE OF THE INVENTION

The cutting off of the leaves from the plant is done with the use of rotating fins which thrash the plant at the petiole, at the point where the leaf is connected to the stem. The plant's stem is not strong enough to take the blow and so its holding is imperative in order to prevent hurting and breaking the stem. Otherwise, without stem holding, the plant gives way during the fin rotation and is hurt or destroyed.

The cut off leaves, upon falling, are driven on a conveyor belt with the assistance of a rotating shaft equipped with lengthwise elastic fins. The fins with their rotation drive the leaves towards the conveyor belt. Said belt is horizontal and conveys the leaves along the cutting off mechanisms. A second inclined belt conveys the leaves up to the height of the collection container. At its outlet there is a mechanism (reciprocating hopper) for layering the leaves into the collection container. The inclined belt's speed is greater than that of the horizontal belt, in order to be able to receive the leaves from the horizontal belt one after the other instead of all together, so that the layering mechanism may lay the leaves in the container one after the other.

The present invention is mounted on an automotive vehicle, which is conducted by a driver. The driver is seated at the front of the vehicle, driving it among the rows of plants. The vehicle is moved with the use of an internal combustion engine or an accumulator battery or a generator. The means of motion of the vehicle also provide the energy required for driving the machine, and for the rotation of the cutting off mechanisms, the rotating shaft, the holding belts, and the conveyor belts.

The mechanism for holding, cutting off and collecting and layering the leaves may be energy supplied by:
1. The vehicle on which it is mounted or
2. An agricultural tractor with wheels of big diameter, so that the tractor moves above the height of the plants.

In order to support the plant during the cutting off procedure, the stem of the plant is held in place with the use of two belts, which move at precisely the same speed as the vehicle. The accuracy of synchronization of the speed of the belts holding the plant's stem, with the speed of the vehicle, is necessary in order to hold the stem of the plant in an upright position. Thus, the held plant is not wounded and the leaves are cut off from the stem.

The cutting off and harvesting mechanism comprises three systems:
A) A system for holding the plant's stem during the cutting off of the leaves.
B) A system for opening up and cutting off the leaves from the stem and
C) A mechanism for collecting the cut off leaves.

The collecting and conveyance of the cut off leaves is realised with the combination of the following parts:
Two rotating shafts with elastic fins parallel to the ground and turning on both sides of the plant prevent the cut off leaves from falling on the ground and drive them to the left and right side of the plant.
Two horizontal conveyor belts adjacent to the shafts and on both sides of the plant convey the leaves horizontally. Subsequently two inclined belts, on the same axis as the horizontal ones, convey the leaves to the desired height.

At the outlet of each inclined belt is placed a reciprocating hopper, which carries out the layering and collection of the plants in the mesh collection container. The hopper with its movement, directs the leaves to the container used at the time, wherein while falling they are layered, leaf by leaf, three or four in tandem, at the same level.

The mesh leaf collection containers are placed manually beneath the outlet of the reciprocating hopper. These containers are made of plastic or metallic mesh. When the collection containers are filled, a worker runs needles throughout the length of the filled containers. The needles are held in place at the top (inlet of leaves during harvesting) and the bottom of the container. The needles run transversely through the leaves which are layered inside the container.

The worker replaces in the machine the filled containers with empty ones. Subsequently the filled containers are transported manually or with the assistance of a vehicle to the curing sites (tents) for leaf curing. The filled containers are placed manually in a horizontal position beneath the plastic tents, so that the leaves are hung, namely perpendicular to the ground.

### DESCRIPTION OF AN EMBODIMENT OF THE INVENTION WITH REGARD TO THE DRAWINGS

More analytically:
A) The holding of the plant's stem is achieved with the assistance of two belts 1 which move on the same plane and enfold the stem of the plant, stabilising it during the cutting off of the leaves.
   The plane of the belts is parallel to the ground and perpendicular to the stem of the plant.
   The plants are planted in rows in the field. With the machine's movement, the plant holding belts are also moved at precisely the same velocity as that of the machine. Thus by enfolding the stem of the plant 12, said stem remains stationery during the machine's movement.
B) The opening up and the cutting off of the leaves is accomplished by means of blades 2 placed on a rotating shaft 5b.
   For the opening up of the leaves, triangular blades 2 fitted to the shaft 5b are rotated, creating during their rotation a cone.
   By moving the vehicle parallel to the rows of plants, this cone 2 is placed between the stem of the plant 12 and the leaf, forcing the leaf to increase its angle with the stem of the plant as shown on figure 4.
   For the cutting off of the leaves from the stem, rectilinear flexible parts 3 cut off the leaves ahead and behind the stem and U-shaped configured flexible parts 11 cut off the leaves at the sides, right and left of the plant. These parts are made of nonstick plastic rod of circular cross section and are fixed on a shaft 5a, 5b which is fitted on a rotating base 4.
   The motor 6 moves one of the shafts 5a, which through the rotating base 4 moves the second shaft 5b.
   The capability of cutting off the leaves from the stem by the rotation of a single base with cutting parts is a width of 50-80 millimetres along the height of the plant.
   For a greater width, two or three shafts with fins 5a, 5b or a longer base, mounted slantwise with multiple cutting parts 20, are used.
C) The harvesting mechanism comprises:
   1.Shafts 7 with elastic fins 8 on each side of the stem of the plant 12.
      Beneath the leaf cutting parts there are two shafts with lengthwise fins 8 covering the length of the cutting parts. Namely the shafts with the fins begin at the start of the first cutting off mechanism to the end of the last mechanism. The overall length of the shafts with fins 7 spreads the length of the cutting off mechanisms and of the horizontal leaf conveyor belts 9. Along the shafts elastic fins 8 are placed.
      The cut off leaves fall beneath the fins. To prevent them from falling on the ground, the two finned shafts 7 rotate one clockwise and one anticlockwise 13, pushing the leaves towards the conveyor belts 9.
      The conveyor belts 9 lie beneath the cutting off mechanisms and convey 10 the leaves towards the collection containers 14.
   2. These belts are horizontal 9 and inclined 10. The horizontal ones 9 are smooth and the inclined ones 10 have a modulated nonslip surface for the conveyance of leaves, facilitating thus the conveyance of the leaves to a higher level, preventing them from sliding backwards.
   3. Collecting the leaves.
      A) the collecting takes place in mesh containers 14 suspended at the end of the inclined belts 10, at the outlet of which are moving drivers - leaf directing hopper 15.

Upon arriving from each inclined conveyor belt 10 by means of the moving hopper, the leaves are directed along the containers in such a way that, when stacked in the containers, they are arranged by three or four in a row per layer.

The mesh collection containers 14 made of plastic or metallic mesh, have a rectangular cross section 17 and can be disassembled in order to reduce the volume of empty containers during transportation and storing. Each container consists of six mesh faces 17α, 17β, 17γ, 17δ, 17ε, 17ζ. These faces form a single object, which can be folded to create a rectangular container. The object is the development of the sides of the rectangular. During folding the five sides are connected 14 leaving open the sixth one, which forms the lid.

During the collection of the leaves, when each container is filled with leaves, the worker closes the lid and places lengthwise leaf holding needles 16.

With the assistance of the needles 16, the leaves are held in place perpendicularly to the ground 18 when the basket is placed in a horizontal position for the curing of the leaves 19.

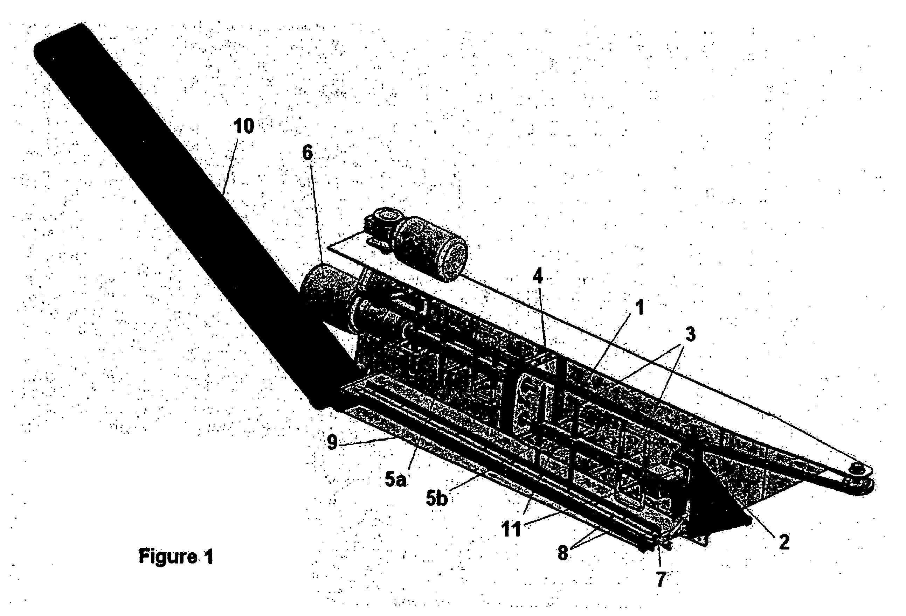

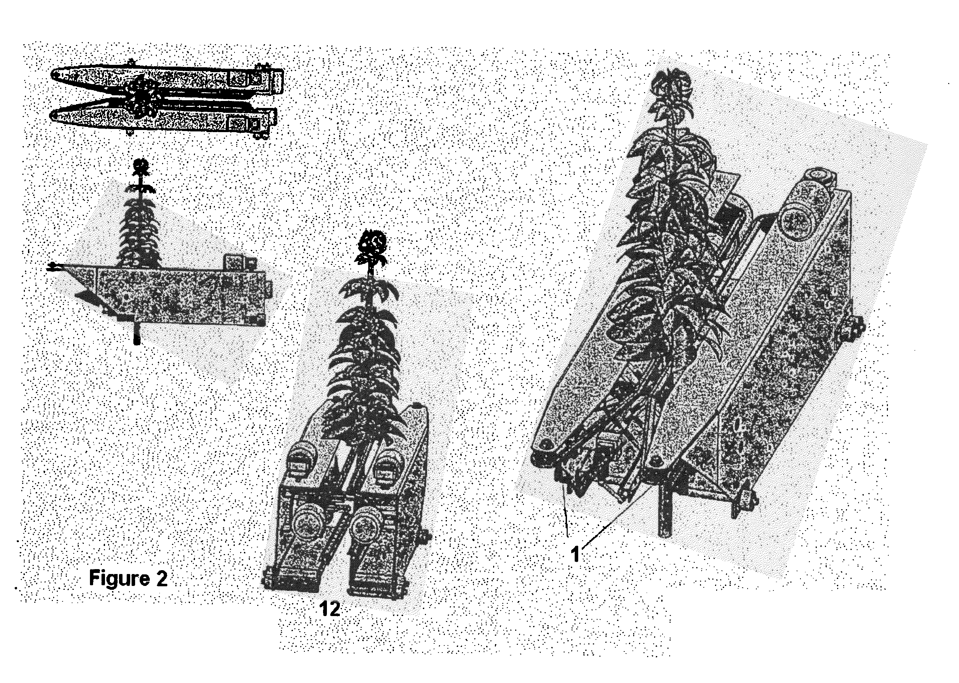

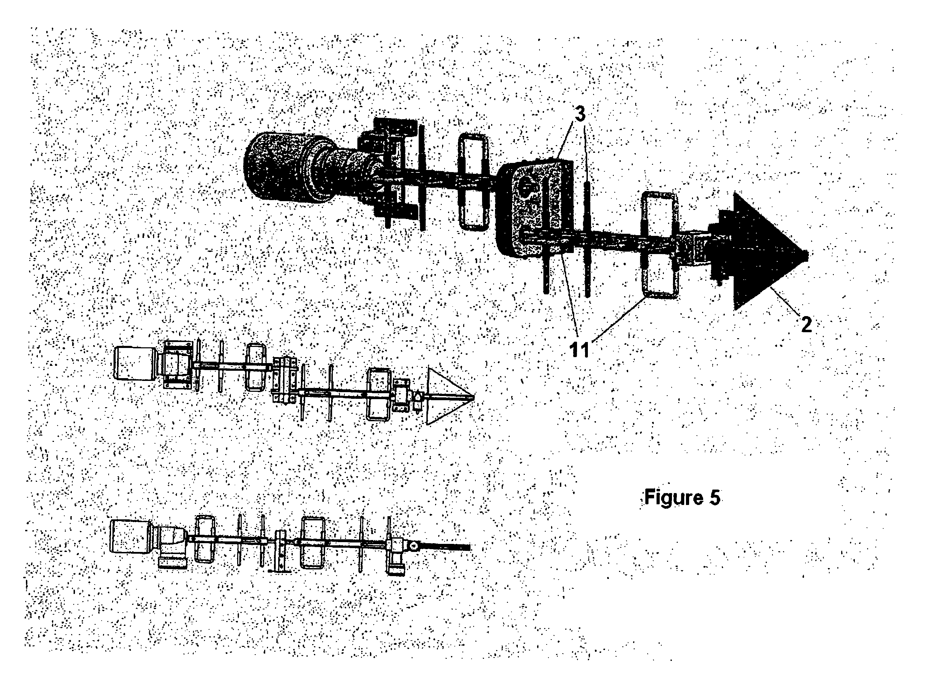

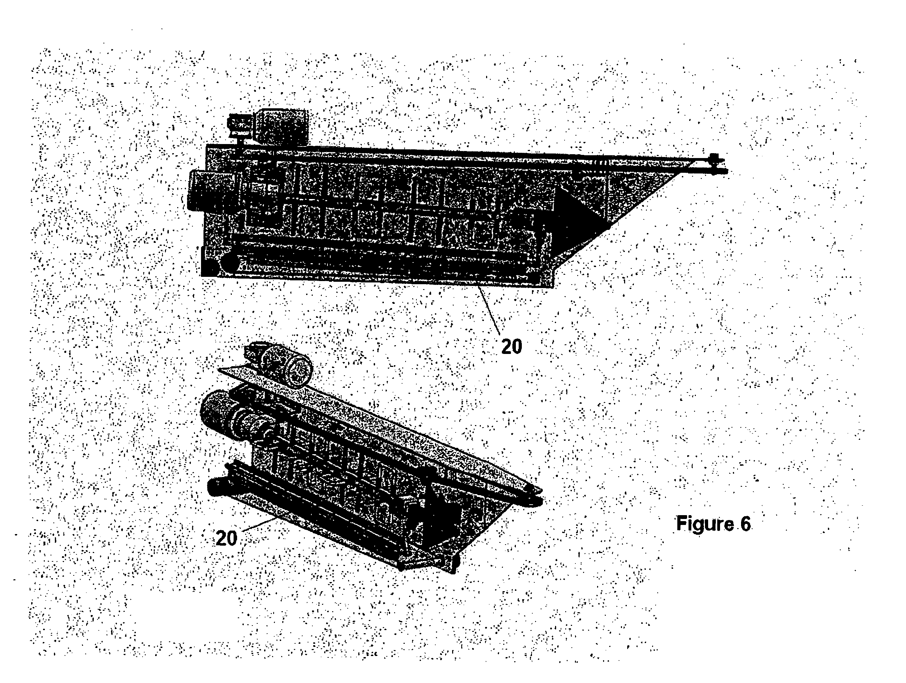

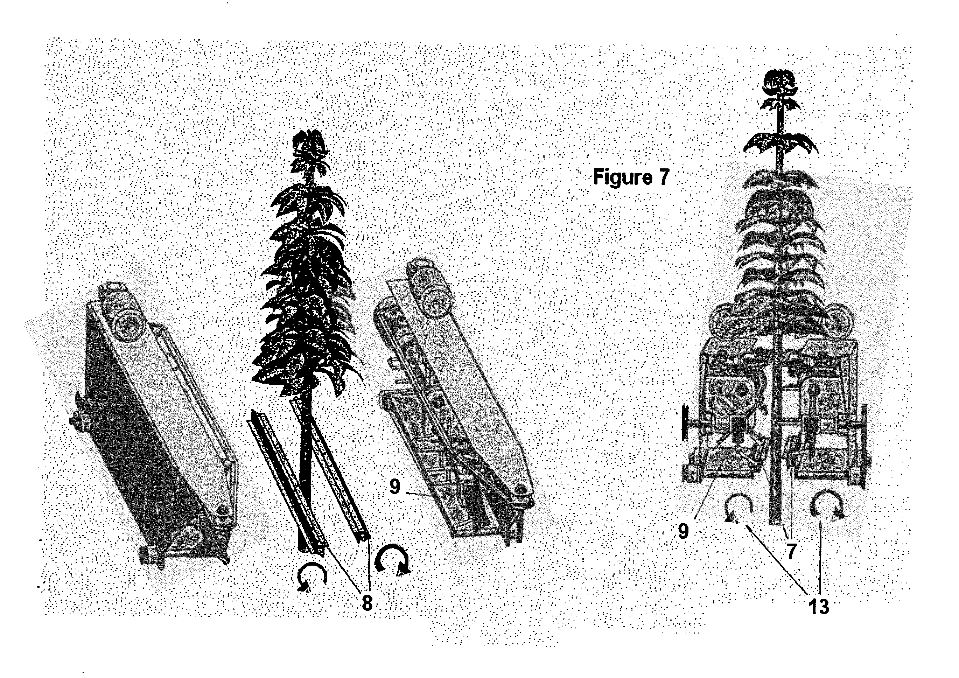

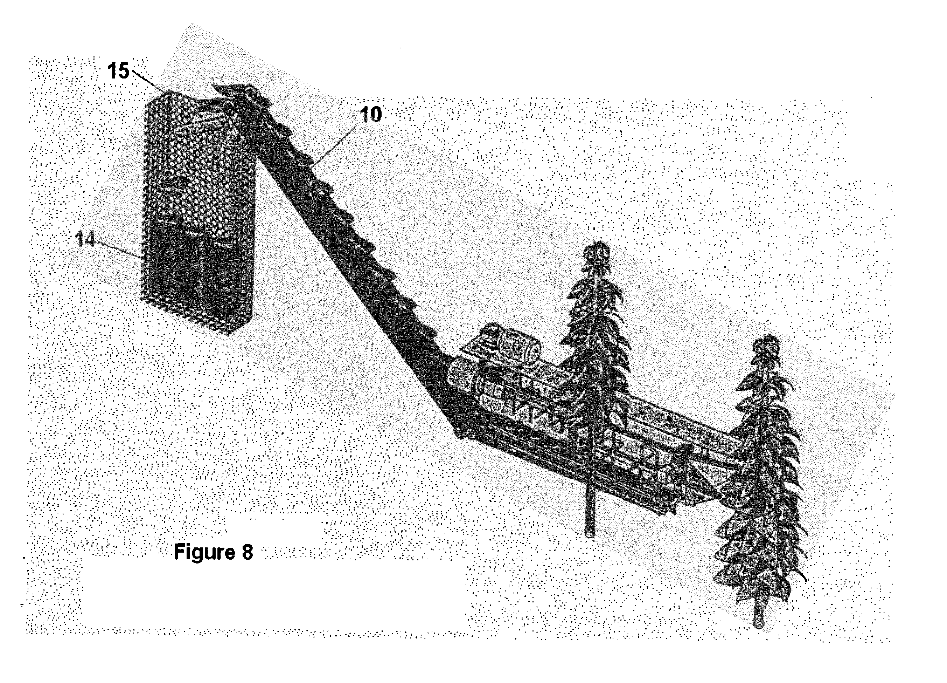

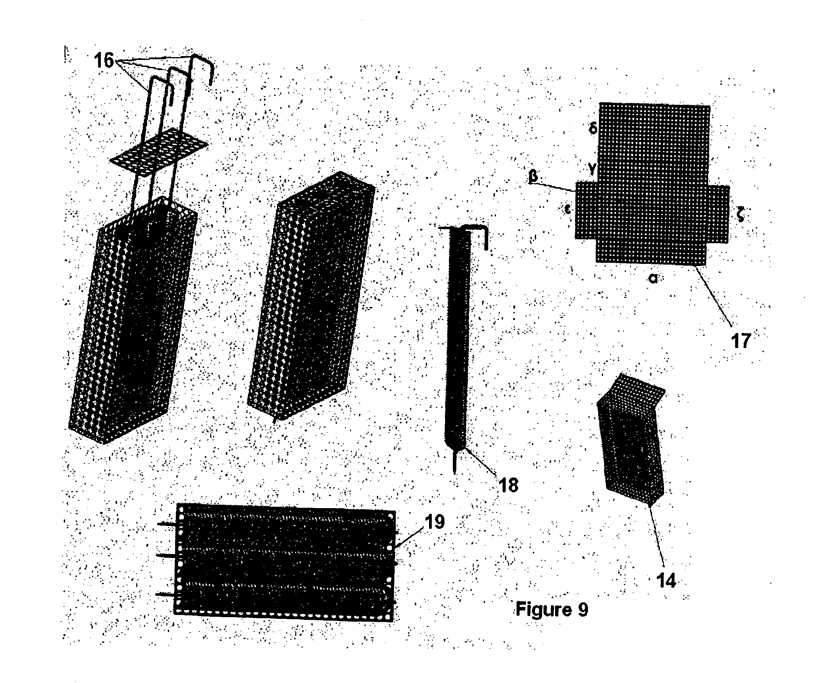

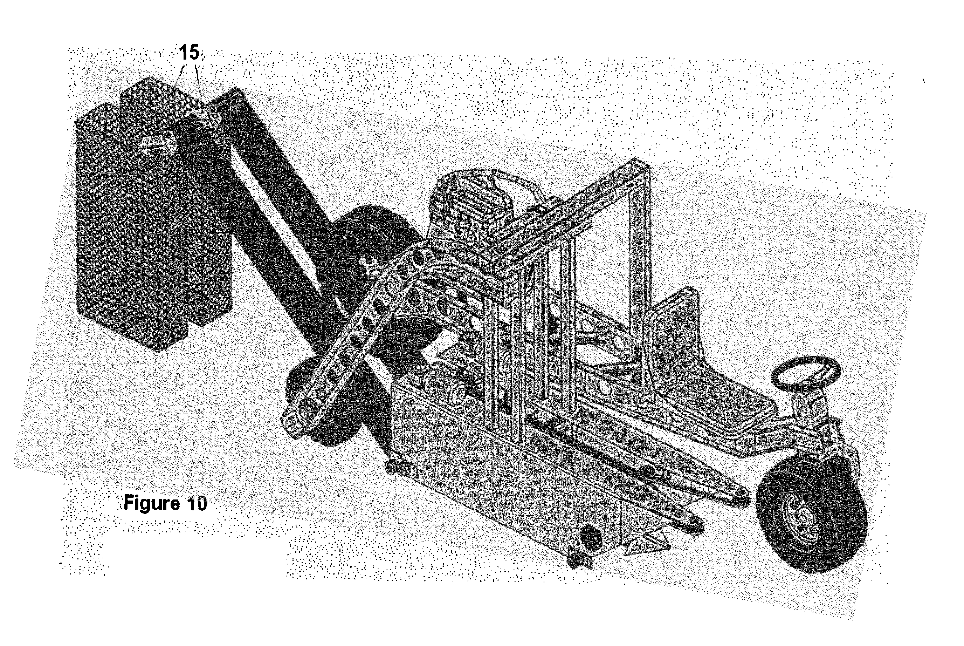

The base on which are fitted the systems for holding the plant, cutting off the leaves, harvesting and layering the leaves, is mounted on the vehicle as shown on figure 10.

This base may be a single one for the collection of leaves at a single row in the field, or multiple for increased potency.

Such systems may be one or two or even more in order to harvest leaves from one, two or more rows of plants.

## Claims

1. Machine for cutting off tobacco leaves with stem holding for eastern type plants for harvesting, layering and collecting the leaves in collection containers, comprising:
- a mechanism to hold the stem of the plant which comprises two horizontal belts (1) which "enfold" and hold in place the stem of the plant during the cutting off, the horizontal belts moving at the same velocity as the movement of the machine in the field,
- collection containers formed by mesh containers (14), wherein the cut off leaves are collected,
**characterised in that** the machine comprises:
- rotating triangular blades (2) which open up the leaves, facilitating their cutting off,
- a mechanism comprising a rotating shaft (5a, 5b) with flexible plastic rectilinear (4) and U-shaped configured parts (11), adjusted to the shaft which cut off the leaves,
- rotating shafts (7) with elastic fins (8) which direct the leaves towards collection belts realised by horizontal belts (9) which collect the cut off leaves and convey them to inclined belts (10), these inclined belts having a modulated nonslip surface, which convey the cut off leaves towards the collection containers (14),
- reciprocating hoppers (15) for directing - layering the leaves attached to the outlet of the inclined belts (10) which direct the leaves so that they are layered in the collection containers (14),
- a vehicle whereupon these mechanisms are attached and which provides the energy for moving and functioning the components.

2. Machine as claim 1 **characterised by** the rotating device for opening up and cutting off tobacco leaves, which comprises:
A) triangular blades (2) attached to a rotating shaft (5b), which during the rotation of the shaft (5b) create a cone, which opens up the leaves from the stem ;
B) flexible plastic parts rectilinear (4) and with U-shape (11) configuration, attached to the shaft (5a, 5b), which during its rotation accelerates the parts, which as a result of the created momentum, cut off the leaves.

3. Machine as in claim 1 and 2, **characterised by** the collection of the cut off leaves and their conveyance to the collection containers with a mechanism which comprises:
a) two rotating shafts (7) with elastic fins (8), which are located underneath the cutting off device and on each side of the plant's stem and which direct the cut off leaves towards the horizontal collection belts (9) ;
b) two horizontal collection belts (9) defined by driving the leaves towards the inclined belts (10) ;
c) two inclined belts (10), defined by driving the leaves towards the collection containers (14).

4. Machine as in claim 1 and 2, **characterised by** laying and collecting the cut off leaves in mesh collection containers and which comprises:
a) reciprocating hoppers (15) attached to the outlet of the inclined belts (10), which are **characterised by** the fact that during the reciprocation they direct the leaves to the collection containers (14), thus layering them ;
b) mesh collection containers (14), wherein the layered tobacco leaves are collected ;
c) needles (16), which run through the cut off and layered leaves in the collection containers (14) and which are **characterised by** the fact that by running through the leaves, they hold them in place when the containers are rotated to a horizontal position for curing.

## Patentansprüche

1. Maschine zum Abschneiden von Tabakblättern mit Halten des Stammes für Pflanzen östlichen Typs zum Ernten, Schichten und Sammeln der Blätter in Sammelbehältern, umfassend:
- einen Mechanismus zum Halten des Stammes der Pflanze, umfassend zwei horizontale Gurte (1), die den Stamm der Pflanze während des Abschneidens "einhüllen" und in Position halten, wobei die horizontalen Gurte mit der gleichen Geschwindigkeit wie die Bewegung der Maschine im Feld sich bewegen,
- Sammelbehälter, die von Gitterbehältern (14) ausgebildet sind, worin die abgeschnittenen Blätter gesammelt werden,
**dadurch gekennzeichnet, dass** die Maschine umfasst:
- rotierende dreieckige Klingen (2), die die Blätter öffnen, zur Erleichterung ihres Abschneidens,
- einen Mechanismus, umfassend eine Drehwelle (5a, 5b) mit flexiblen geradlinigen (4) und U-förmig konfigurierten Kunststoffteilen (11), die auf der die Blätter abschneidenden Welle eingestellt sind,
- Drehwellen (7) mit elastischen Finnen (8), die die Blätter zu Sammelgurten (9) lenken, welche durch horizontale Gurte ausgeführt sind, die die abgeschnittenen Blätter sammeln und sie zu Schräggurten (10) befördern, wobei diese Schräggurte eine modulierte rutschfeste Oberfläche aufweisen, welche die abgeschnittenen Blätter zu den Sammelbehältern (14) befördern,
- hin- und herbewegende Trichter (15) zum Lenken - Schichten der am Auslass der Schräggurte (10) angeschlossenen Blätter, welche die Blätter so lenken, dass sie in den Sammelbehältern (14) geschichtet sind,
- ein Fahrzeug, woran diese Mechanismen angeschlossen sind und welches die Energie für die Bewegung und das Funktionieren der Komponenten bietet.

2. Maschine nach Anspruch 1, **gekennzeichnet durch** die Drehvorrichtung zum Öffnen und Abschneiden von Tabakblättern, umfassend:
A) an einer Drehwelle (5b) angeschlossene dreieckige Klingen (2), die während der Drehung der Welle (5b) einen Kegel schaffen, der die Blätter vom Stamm öffnet;
B) flexible Kunststoffteile, geradlinige (4) und mit einer U-förmigen (11) Konfiguration, die an der Welle (5a, 5b) angeschlossen sind, die bei ihre Drehung die Teile beschleunigt, die infolge von der geschaffenen Dynamik die Blätter abschneiden.

3. Maschine nach Anspruch 1 und 2, **gekennzeichnet durch** die Sammlung der abgeschnittenen Blätter und ihre Beförderung zu den Sammelbehältern mit einem Mechanismus, umfassend:
a) zwei Drehwellen (7) mit elastischen Finnen (8), die unterhalb der Abschneidvorrichtung und auf jeder Seite des Stammes der Pflanze angeordnet sind und die die abgeschnittenen Blätter zu den horizontalen Sammelgurten (9) lenken;
b) zwei horizontale Sammelgurte (9), die **durch** Leiten der Blätter zu den Schräggurten (10) definiert sind;
c) zwei Schräggurte (10), die **durch** Leiten der Blätter zu den Sammelbehältern (14) definiert sind.

4. Maschine nach Anspruch 1 und 2, **gekennzeichnet durch** Auflegen und Sammeln der abgeschnittenen Blätter in Gittersammelbehältern, umfassend:
a) am Auslass der Schräggurte (10) angeschlossene hin- und herbewegende Trichter (15), die **durch** die Tatsache gekennzeichnet sind, dass sie während der Hin- und Herbewegung die Blätter zu den Sammelbehältern (14) so lenken, dass sie diese schichten;
b) Gittersammelbehälter (14), worin die geschichteten Tabakblätter gesammelt werden;
c) Nadeln (16), die die abgeschnittenen und geschichteten Blätter in den Sammelbehältern (14) durchbohren und die **durch** die Tatsache gekennzeichnet sind, dass **durch** das Durchbohren der Blätter, sie diese in Position halten, wenn die Behälter zur Trocknung in eine horizontale Position gedreht sind.

## Revendications

1. Machine de coupe de feuilles de tabac avec mécanisme de maintien pour plantes de type oriental pour la récolte, disposition en couches et collecte des feuilles dans des conteneurs de réception ; comprenant :
- un mécanisme de maintien de la tige de la plante comprenant deux bandes horizontales (1) «enveloppant» et maintenant en place la tige de la plante pendant la coupe, les bandes horizontales se déplaçant à la même vitesse que le mouvement de la machine sur le terrain,
- des conteneurs de collecte constitués par des conteneurs en treillis (14), dans lesquels sont collectés les feuilles découpées,
**caractérisée en ce que** la machine comprend :
- des lames triangulaires rotatives (2) ouvrant les feuilles, favorisant leur découpe,
- un mécanisme comprenant un arbre rotatif (5a, 5b) avec des parties rectilignes flexibles en matière plastique (4) et des parties configurées en U (11), montées sur l' arbre coupant les feuilles,
- des arbres rotatifs (7) avec des aubes élastiques (8) dirigeant les feuilles vers des bandes de réception réalisées par des bandes horizontales (9) réçevant les feuilles découpés et les transportant vers les bandes inclinées (10), présentant ces bandes inclinées une surface modulée antidérapante, transportant ladite surface les feuilles découpés vers les conteneurs de réception (14),
- des trémies à mouvement alternatif (15) pour conduire - disposer en couches les feuilles attachées à la sortie des bandes inclinées (10) conduisant les feuilles en sorte qu'elles soient disposées par couches dans les conteneurs de réception (14),
- un véhicule sur lequel ces mécanismes sont attachés fournissant l'énergie pour le mouvement et le fonctionnement des composants.

2. Machine selon la revendication 1, **caractérisée par** le dispositif de rotation pour l'ouverture et la découpe de feuilles de tabac, comprenant :
A) des lames triangulaires (2) attachées à l'arbre rotatif (5b), lesdites lames triangulaires créant un cône pendant la rotation de l'arbre (5b), ouvrant les feuilles à partir de la tige.
B) des parties flexibles rectilignes en plastique (4) et configurées en U (11), attachées à l'arbre (5a,5b), ledit arbre accélérant les parties pendant sa rotation, ce qui résulte, du fait du moment crée, dans la découpe des feuilles.

3. Machine selon les revendications 1 et 2, **caractérisée par** la collecte des feuilles découpées et leur transport vers les conteneurs de réception avec un mécanisme comprenant :
a) deux arbres rotatifs (7) avec des aubes élastiques (8), situés sous le dispositif de découpe et sur chaque face de la tige de la plante, conduisant les feuilles découpés vers les bandes horizontales de réception (9).
b) deux bandes horizontales de réception (9) définies par le transport des feuilles vers les bandes inclinées (10).
c) deux bandes inclinées (10), définies par le transport des feuilles vers les conteneurs de réception (14).

4. Machine selon les revendications 1 et 2, **caractérisée par** la pose et la collecte des feuilles découpées dans des conteneurs de réception en treillis, comprenant :
a) des trémies à mouvement alternatif (15) attachées à la sortie des bandes inclinées (10), **caractérisées en ce qu'**elles conduisent les feuilles vers les conteneurs de réception (14) en sorte qu'elles soient disposées en couches.
b) des conteneurs de réception en treillis (14), dans lesquels sont collectées les couches des feuilles de tabac.
c) des aiguilles (16), traversant les feuilles découpés et disposées en couches dans les conteneurs de réception (14), **caractérisées par le fait qu'** en traversant les feuilles, elles les maintiennent en place quand les conteneurs se mettent en rotation dans une position horizontale pour le séchage.
